# EUROPEAN PATENT SPECIFICATION

(11) **EP 2 662 582 B1**
(45) Date of publication and mention of the grant of the patent: **04.07.2018**
(21) Application number: 13002398.9
(22) Date of filing: 06.05.2013
(51) Int. Cl.: F16C 33/12, F16C 33/20, F16C 33/14, C23C 4/12, C22C 19/05, C23C 28/00

(54) **Manufacturing process of a multi-layer sliding bearing and multi-layer sliding bearing**
Herstellungsverfahren eines Mehrschichtgleitlagers und Mehrschichtgleitlager
Method de fabrication d'un palier lisse multi-couches et palier multi-couches

(30) Priority: 08.05.2012 IT BG20120023
(43) Date of publication of application: 13.11.2013
(73) Proprietor: Technymon Tecnology Europe SpA, 24060 Castelli Calepio (IT)
(72) Inventor: Mongodi, Raniero, 24060 Castelli Calepio (BG) (IT)
(74) Representative: Bruni, Giovanni

(56) References cited:
- WO-A1-98/42886
- DE-A1- 2 928 572
- US-A1- 2003 185 474
- US-A1- 2008 159 671
- US-B1- 6 726 994

## Description

The present invention relates to a sliding bearing having a multi-layer structure able to guarantee optimal performance and obtained by means of an innovative method of production.

The sliding bearings differ in the type of sliding which can be dry or with lubricant. In particular, the dry sliding bearings are realized in bronze and for this reason are called bushings; in the following, owing to the price of bronze, this raw material has been substituted almost totally by thermoplastic materials, such for example polytetrafluoroethylene (PTFE).

The materials used to realize sliding bearings are characterized by a low coefficient of friction so that the energy dissipated in heat is reduced and so that the working temperature of the same bearing is reduced; by a good mechanical resistance to reduce wear and by a high p*v value (product of pressure by speed); moreover, they have to be provided with an optimal thermal conductivity to allow heat to flow outside; finally, they have to be resistant to corrosion; in fact, the support, the shaft and the bushing can be always immersed in lubricant, where it is easy the development of acid radicals, which can compromise the correct functioning of the bearing. All these characteristics have to be little influenced by the temperature variation. In particular, in working conditions with not high temperatures and in case of reduced mechanical resistances, the metal materials can be totally substituted by thermoplastic materials; when instead, the mechanical resistances required are high, the thermoplastic materials are applied partially on the metal with a thin layer in order to reduce the coefficient of friction and to improve lubrication when in use. The important characteristic is that these two components of the bushing are able to resist to wear, and above all allow a reduced friction on the sliding surfaces, so that it can be obtained the longest possible duration.

At the state of the art, there are known and are usually available on the market sliding bearings widely diffused in all fields of mechanics such for example the field of machine-tools construction or of engines, or of vehicles in general. The aim of these bearings is to reduce friction between two objects moving in rotation or linearly between each other. In particular, there are known sliding bearings having as base material Nickel-Chrome alloys to obtain products with anti-corrosion, anti-oxidant, anti-wear properties, resistance to high temperatures and to high forces thanks also to the use in the compound of fractions of metals as for example Si, Cr, Co etc...

For example, the Japanese Patent application n° JP 11050908A2 relates to a composite material of a bearing comprising Cr3C2/Ni-Cr, which gives high mechanic hardness to the final product. According to another example which is described in the European Patent EP 0818550A1, a composite material of a sliding bearing is made up of an iron-nickel-chrome alloy in determined percentages, so that the product is given high resistance to corrosion.

**The document** DE2928572A1 **described a Method of production of a multi-layer sliding bearing characterized by the steps of preparation of a support, deposition of a layer in copper-aluminum alloy by means of electric are on said foil, deposition of a PTFE mixture on the bi-component section bar thus obtained and the realization of the final product.**

While on the one hand there are known examples of multi-layer sliding bearings which use different nickel-chrome alloys, solutions identical to the one provided by the present invention do not exist yet. In particular, the structure of the bearing object of the present invention is able to combine optimally the mechanical strength of steel, the capacity of thermal conductivity of bronze and the low coefficient of friction of PTFE, without using lubricants, thanks to a new composition of the same bearing and a specific method of production thereof.

Some advantages of the present bearing are given by the fact that the same is able to resist to static pressures, on the working surface, equal to 250N/mm² maximum, dynamic pressures equal to 140N/mm² maximum and cyclic pressures with 60N/mm² maximum amplitude. Moreover, said bearing can work at 2,5 m/s maximum speed, with 1,8 N/mm2* m/s p*v and temperature between -190° and 280°C.

Clearly, said sliding bearing can be used in any field of mechanics and since it is very versatile, it can be produced also in dimensions other than the standard ones, i.e. they can be "customized" to client demand.

Therefore, object of the present invention is a dry sliding bearing characterized in that it is provided with a "sandwich" structure comprising a first surface layer in modified PTFE, as antifriction coating or sliding layer, a second intermediate bronze layer and a third one, which forms the support, made up of a nickel-chrome alloy, one thereof known with the name Inconel-625, as it is described in claim 4. Said nickel-chrome alloy is used for its chemical resistance to corrosion, and also because the bearing obtained using Inconel-625 is usually applied in valves, whose outer components (shaft, shutter, seat) are made up of corrosion resistant materials as well.

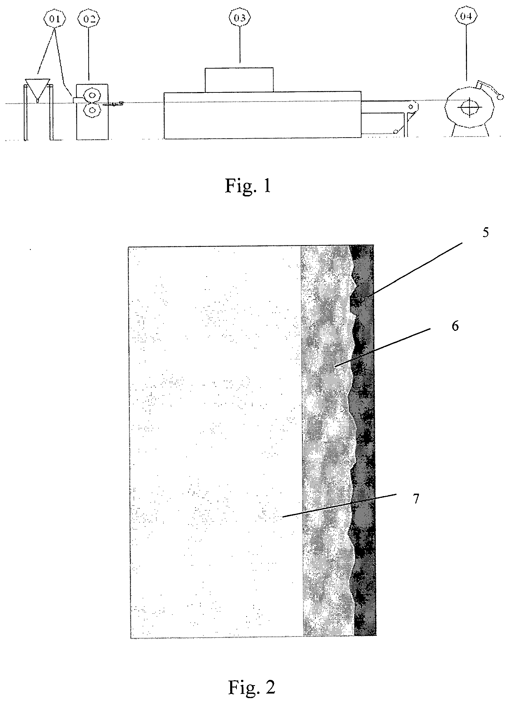

Another object of the present invention is the method of production of the above cited bearing, which solves the other technical problem of the adherence of the layer in copper-aluminum alloy on the support in nickel-chrome alloy, as it is described in claim 1. These and other advantages will be highlighted in the following description of the invention, which refers specifically to figs. 1 and 2, in which there is shown an absolutely not limiting embodiment of the present invention.

In particular:
Fig. 1 shows a scheme of the production line of the material object of the present invention;
Fig. 2 shows the three layers forming the sliding bearing obtained by means of the method of production object of the present invention.

Referring to said figures, the product claimed and obtained by means of the described method is provided with a sandwich structure (fig. 2) comprising specifically a first outer layer in PTFE (5), a second intermediate layer in copper-aluminum alloy (6) and a third inner layer formed by the nickel-chrome alloy (7). More in particular, the first layer in PTFE with fillers is between 10 and 50 µm thick, the second layer is in copper-aluminum alloy with aluminum in ponderal percentage ≤ 15% and is between 50 and 200 µm thick, while the third layer is made up of the following elements in the respective ponderal percentages: Cr ≤ 25%, Mo ≤ 12%, tantalum + niobium ≤ 5%, Ni = rest % and is between 0.25 and 2.70 mm thick, according to the dimensions of the bearing.

Concerning the method of production of the multi-layer sliding bearing, it comprises the steps of:
- preparation of a support as a foil made up of nickel-chrome alloy;
- deposition of a layer in copper-aluminum alloy by means of electric arc on said foil.

As first step, the support formed by the nickel-chrome alloy has to be treated with alumina blasting to guarantee that the surface is cleaned and degreased. The roughness Ra to be obtained on the foil surface in nickel-chrome alloy is between 3 µm and 6 µm.

In the following, the layer in copper-aluminum alloy is deposited on the surface treated by means of an electric arc process which melts a wire in copper-aluminum alloy and projects its portions on the surface of said support. Said wire has a diameter between 2 and 3 mm and the metal surface in copper-aluminum alloy has to reach a surface roughness Ra between 20 and 40 µm and a thickness between 0.05 and 0.30 mm.

Said process is the result of a plurality of experimental tests which proved it to be the only able to guarantee a good adherence and a great reliability in time.

The product thus obtained is then treated on the production line (fig. 1) to obtain the final product, which comprises the following steps:
- passage through a rolling mill (2);
- polymerization in furnace (3);
- production of a final section bar (4);
- cutting of strips and production of the bearing. The passage of the product obtained in the container of PTFE (1) is carried out through a hopper from which the PTFE mixture is released directly on the strip on which the layer copper-aluminum alloy was deposited thus providing a sort of deposition. When the material reaches the rollers of the rolling mill (2), the PTFE deposition is diffused on the whole surface in width and is contained with shoulders in plastic

material. The PTFE mixture passes through the rollers of the rolling mill and is introduced in the porosity of the surface in copper-aluminum alloy by means of the force and thrust of the same rollers.

Then the product passes in the polymerization furnace (3) for baking the PTFE layer. Said furnace is of muffle kind with belt conveyor and fumes emission. From outside the furnace it is possible to control the surface of said strip, which has to be grayish and substantially rough to the touch, without bubbles, cracks and raised portions of the same layer, spots or halos tending to red which indicate that it was baked at a not proper temperature (high temperature).

At the end of the process it is obtained a sectioned strip, on which it will be controlled the correct polymerization and the adherence of the material by means of the respective "PTFE adherence test".

To obtain the final product, i.e. the sliding bearing object of the present invention, the section bar is cut 24-48 hours after the production in longitudinal way to obtain straps of variable dimensions in function of the dimensions of the bearing to be produced.

At this point, it is possible to proceed with the cold moulding of the bearings. The last step to carry out is the chamfering, which usually occurs by means of a lathe with gripping pliers suitably dimensioned in order not to deform the piece.

The obtained development after cutting is that the PTFE layer (5) is arranged inside the bearing while the layer formed by the nickel-chrome alloy (7) is outside the same. The layer in copper-aluminum (6) alloy is interposed between the layer in PTFE (5) and the support (7), which makes up the outer surface of the bearing.

Clearly the above described embodiments are only some not limiting examples of the present invention. The invention is defined by the appended claims only.

## Claims

1. Method of production of a multi-layer sliding bearing **characterized by** the following steps:
- preparation of a support in form of foil made up of a nickel-chrome alloy with roughness Ra between 3 and 6 µm;
- deposition of a layer in copper-aluminum alloy by means of electric arc on said foil in nickel-chrome alloy, wherein said deposition layer being a wire with diameter between 2 and 3 mm which melts and projects its portions on the surface to be treated so that it is reached a surface roughness Ra between 20 and 40 µm and a thickness between 0.05 and 0.30 mm.
- deposition (1) of a PTFE mixture on the bi-component section bar thus obtained;
- realization of the final product.

2. Method according to claim 1, wherein said preparation of the final product comprises the following steps:
- passage through a rolling mill (2);
- polymerization in furnace (3);
- production of a final section bar (4);
- cutting of strips and production of the bearing.

3. Method according to claim 1 or 2, wherein said preparation of the support comprises a treatment of the same support with alumina blasting, to guarantee that the surface is cleaned and degreased.

4. Sliding bearing realized according to the method described in any one of claims 1 to 3, having a "sandwich" structure comprising an inner support layer made up of a nickel-chrome alloy (7), an intermediate layer in copper-aluminum alloy (6) and an outer layer in PTFE (5) and wherein :
- the support layer (7) is made up of a mixture of the following elements, in the respective ponderal percentages: Cr ≤ 25%, Mo ≤ 12%, Ta + Nb ≤ 5%, Ni = rest %;
- the intermediate layer is a copper-aluminum alloy (6).

5. Sliding bearing according to claim 4, **characterized in that** said layer in copper-aluminum (6) alloy is made up of aluminum in ponderal percentage ≤ 15%.

6. Sliding bearing according to claim 5, **characterized in that** said layer in copper-aluminum alloy (6) is between 50 and 200 µm thick.

7. Sliding bearing according to claim 4, **characterized in that** said layer in PTFE (5) is between 10 and 50 µm thick.

8. Sliding bearing according to claim 4, **characterized in that** said support layer (7) is between 0.25 and 2.70 mm thick.

## Patentansprüche

1. Verfahren zur Herstellung eines Mehrschichtgleitlagers, **gekennzeichnet durch** folgende Schritte:
- Herstellung eines Trägers in Gestalt einer Platte aus einer Nickel-Chrom-Legierung mit einer Rauheit zwischen 3 und 6 µm;
- Abscheiden einer Schicht einer Kupfer-Aluminium-Legierung mittels eines Lichtbogens auf der besagten Platte aus Nickel-Chrom-Legierung, wobei die besagte Abscheidungsschicht durch einen Draht mit einem Durchmesser von 2 bis 3 mm gebildet wird, der schmilzt und seine Teile auf der zu behandelnden Oberfläche wirft, um eine Oberflächenrauheit Ra zwischen 20 und 40 µm und eine Dicke zwischen 0,05 und 0,30 mm zu erreichen;
- Abscheiden (1) einer PTFE-Mischung auf der so erhaltenen getrennten Zweikomponentenstange;
- Herstellung des Endprodukts.

2. Verfahren nach Anspruch 1, wobei die besagte Herstellung des Endprodukts folgende Schritte umfasst:
- Durchgang durch ein Walzwerk (2);
- Polymerisation im Ofen (3);
- Herstellung einer getrennten Endstange (4);
- Schneiden von Streifen und Fertigung des Lagers.

3. Verfahren nach Anspruch 1 oder 2, wobei die besagte Herstellung des Trägers eine Behandlung des gleichen Trägers mit Aluminiumoxidschliff umfasst, um sicherzustellen, dass die besagte Oberfläche gereinigt und entfettet wird.

4. Gleitlager, nach dem in einem der Ansprüche 1 bis 3 beschriebenen Verfahren hergestellt, mit einer "sandwichartigen" Struktur, eine innere Trägerschicht umfassend, die aus einer Nickel-Chrom-Legierung (7) gebildet ist, eine Zwischenschicht aus einer Kupfer-Aluminium Legierung (6) und eine äußere Schicht aus PTFE (5), und wobei
- die Trägerschicht (7) besteht aus einem Gemisch der folgenden Elemente in den jeweiligen Gewichtsprozentsätzen: Cr ≤ 25%, Mo ≤ 12%, Ta + Nb ≤ 5%, Ni = Rest%;
- die Zwischenschicht ist eine Kupfer-Aluminium-Legierung (6).

5. Gleitlager nach Anspruch 4, **dadurch gekennzeichnet, dass** die besagte Schicht aus einer Kupfer-Aluminium-Legierung (6) aus Aluminium mit einem Gewichtsprozentanteil von ≤ 15% gebildet ist.

6. Gleitlager nach Anspruch 5, **dadurch gekennzeichnet, dass** die besagte Schicht aus einer Kupfer-Aluminium-Legierung (6) eine Dicke zwischen 50 und 200 µm aufweist.

7. Gleitlager nach Anspruch 4, **dadurch gekennzeichnet, dass** die besagte PTFE-Schicht (5) eine Dicke zwischen 10 und 50 µm aufweist.

8. Gleitlager nach Anspruch 4, **dadurch gekennzeichnet, dass** die gesagte Trägerschicht (7) eine Dicke zwischen 0,25 und 2,70 mm aufweist.

## Revendications

1. Procédé de fabrication d'un palier de glissement multicouche **caractérisé par** les opérations suivantes:
- préparation d'un support sous la forme d'une feuille constituée d'un alliage nickel-chrome de rugosité comprise entre 3 et 6 µm;
- dépôt d'une couche d'un alliage cuivre-aluminium au moyen d'un arc électrique sur ladite feuille d'alliage nickel-chrome avec ladite couche de dépôt formée par un fil ayant un diamètre de 2 à 3 mm qui fond et projette ses parties sur la surface à traiter, de manière à atteindre une rugosité de surface Ra comprise entre 20 et 40 µm et une épaisseur comprise entre 0,05 et 0,30 mm;
- dépôt (1) d'un mélange de PTFE sur la tige sectionnée à deux composants ainsi obtenue;
- réalisation du produit final.

2. Procédé selon la revendication 1, dans lequel ladite préparation du produit final comprend les opérations suivantes:
- passage à travers un laminoir (2);
- polymérisation en four (3);
- production d'une tige sectionnée finale (4);
- découpage de bandes et production de palier.

3. Procédé selon la revendication 1 ou 2, dans lequel ladite préparation du support comprend un traitement du même support avec un dynamitage d'alumine, pour assurer le nettoyage et le dégraissage de la surface.

4. Palier de glissement réalisé selon le procédé décrit dans l'une quelconque des revendications 1 à 3, avec une structure "sandwich" comprenant une couche de support interne formée d'un alliage de nickel-chrome (7), une couche intermédiaire dans un alliage cuivre-aluminium (6) et une couche externe de PTFE (5) et dans lequel:
- la couche de support (7) est constituée d'un mélange des éléments suivants, dans les pourcentages en poids respectifs: Cr ≤ 25%, Mo ≤ 12%, Ta + Nb ≤ 5%, Ni = reste %;
- la couche intermédiaire est un alliage de cuivre-aluminium (6).

5. Palier de glissement selon la revendication 4, **caractérisé en ce que** ladite couche dans un alliage cuivre-aluminium (6) est formé d'aluminium avec un pourcentage en poids inférieur ≤ 15%.

6. Palier de glissement selon la revendication 5, **caractérisé en ce que** ladite couche dans un alliage cuivre-aluminium (6) a une épaisseur entre 50 et 200 µm.

7. Palier de glissement selon la revendication 4, **caractérisé en ce que** ladite couche de PTFE (5) a une épaisseur entre 10 et 50 µm.

8. Palier de glissement selon la revendication 4, **caractérisé en ce que** ladite couche de support (7) a une épaisseur entre 0,25 et 2,70 mm.
